# EUROPEAN PATENT APPLICATION

(11) **EP 1 691 105 A2**
(43) Date of publication of application: **16.08.2006**
(21) Application number: 05028555.0
(22) Date of filing: 28.12.2005
(51) Int. Cl.: F16F 9/05

(54) **Improved air spring piston for motor vehicle, trailer and half-trailer suspension systems**

(30) Priority: 14.02.2005 IT MI20050211
(71) Applicant: Stuani S.p.A., 20019 Settimo Milanese MI (IT)
(72) Inventor: Stuani, Cesare, 20123 Milano (IT)
(74) Representative: Cicogna, Franco

(57) **Abstract**

The present invention relates to a bottom coupling element for an air spring and a vehicle axle, commonly called piston, comprising an outer cylindric element coupled in a cup form to a lower bearing surface or bottom, reinforced by inner ribs for increasing its structural strength.

A rigid disc to which a clamping screw is welded is co-molded in the bottom and is provided to be connected to the vehicle axle.

The cylindric element of the piston is coupled to a flat portion in the form of a mantle, which is in turn coupled to a projecting portion thereby defining a ring arrangement on which can be tightly engaged an edge of an elastomeric membrane.

The piston is made as a single-piece of practically constant thickness, from a plastics material and is so designed as to exploit the overall volume of the piston.

## Description

### BACKGROUND OF THE INVENTION

The present invention relates to an improved air spring piston for motor vehicle, trailer and half-trailer suspension systems.

As known, air spring are conventionally used in a motor vehicle to connect an axle to a chassis, for supporting a load and elastically absorb road unevennesses, on which the motor vehicle is driven.

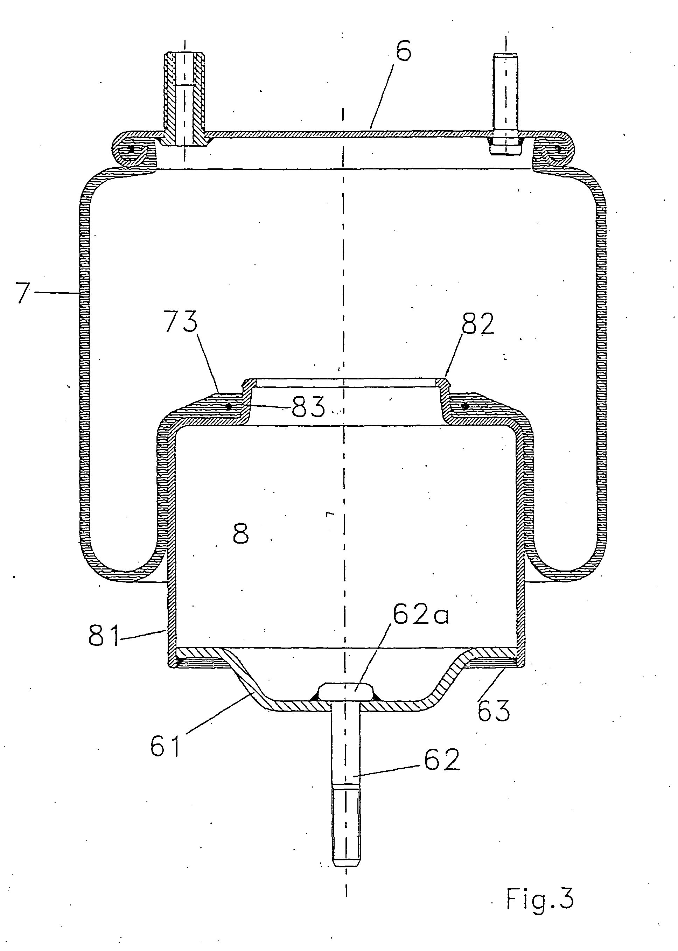

A conventional air spring is shown in figure 3 and comprises a resilient or elastomeric membrane (7) having a cylindric or conic shape in its bottom part, and to the end portions thereof are tightly coupled a connecting element (6) for connecting with the motor vehicle chassis or bearing construction; a substantially cylindric element (8), commonly called "piston" for connection with an axle or suspension elements clamped to said axle.

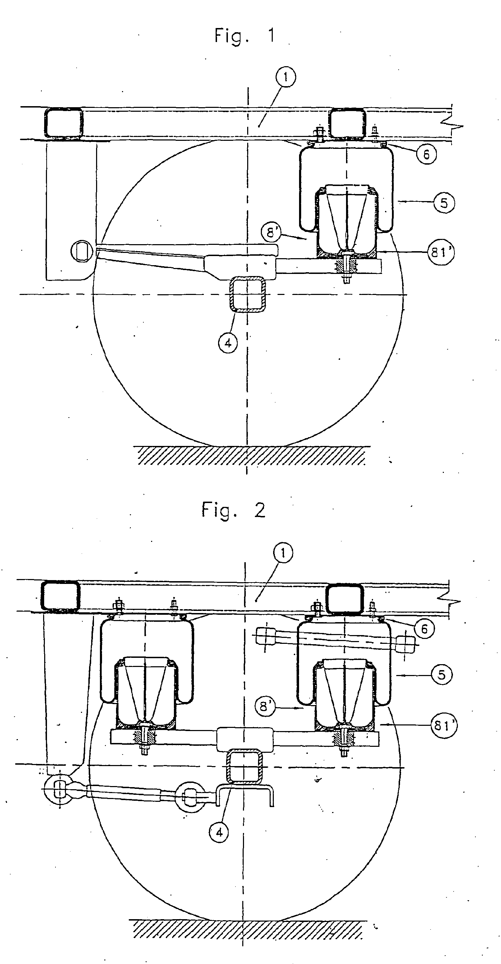

The elastomeric membrane (7) is arranged between said elements (6) and (8) and is coupled to the latter so as to provide an air tight connection and being clamped to the motor vehicle chassis (1) through said element (6) and to the axle (4) through the piston (8) (figures 1 and 2).

The membrane (7) defines and inner volume which is occupied by a pressurized fluid.

The piston (8) has generally a substantially cylindric cup shape (81), and is made of a sheet metal material, for example drawn by pressing.

On the top end portion of the piston which is nearest to the membrane (7) a bell element (81) presents a cylindric coaxial projection (82), thereabout an edge (73) of the membrane (7) is arranged and restrained.

The bottom mouth portion of the bell element (81) is closed by air tight weldments (63), by a flat or disc element (61), either contoured or not, made of a sheet metal material, for example also drawn by pressing.

The flat element (61) comprises a central throughgoing hole, for engaging therein a threading screw (62) having a screw head (62a) tightly welded to the flat element (61) to allow said piston (8) to be directly fixed to the motor vehicle axle, or other suspension elements rigidly coupled to said axle.

All the components of the axle (4) coupling piston (8) are made of a metal material and are assembled by welding operations to a perfectly air tight condition.

### SUMMARY OF THE INVENTION

The main object of the present invention is to provide a bottom coupling element of an air spring, the so-called piston (8), for connection to an axle (4) of motor vehicles, trailers, half-trailers and the like, which has a small weight, is not subjected to corrosion, can be quickly assembled, is adapted to resist against applied loads and, most importantly, adapted to exploit all the air volume inside it.

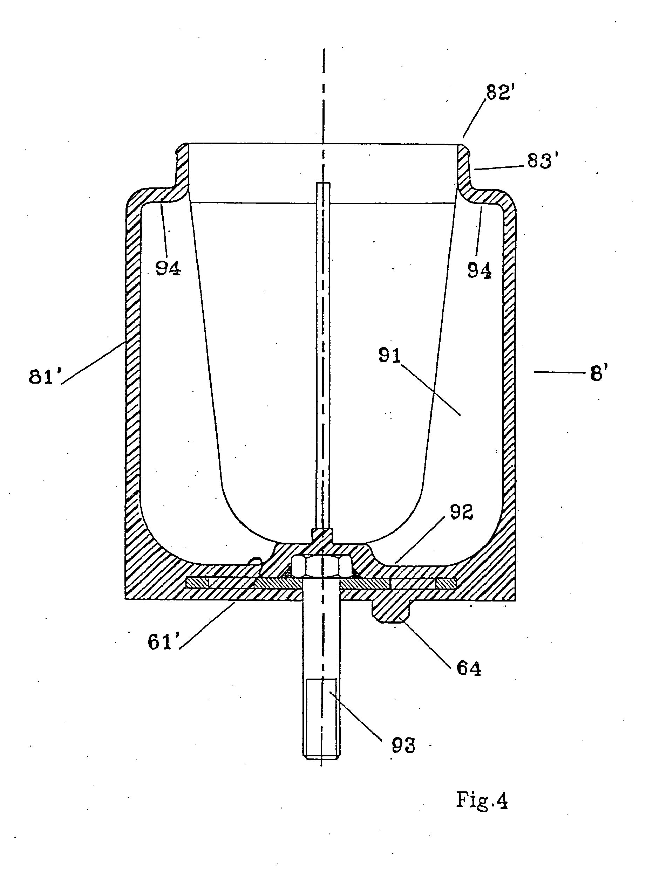

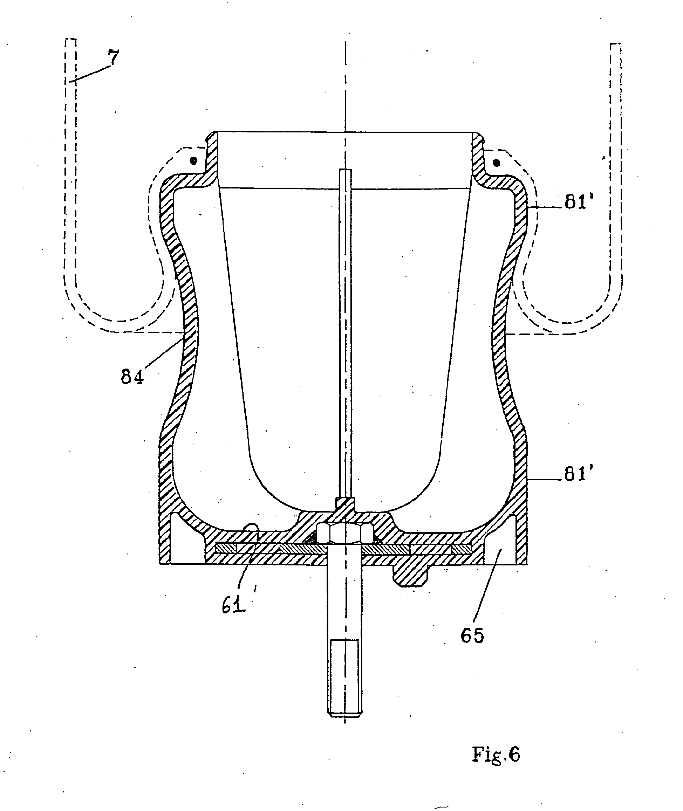

This object is achieved, according to the present invention, by a bottom coupling element, called piston (8'), for an air spring, the main features of which are defined in claim 1 (figure 4).

In the figures showing the pistons (8') according to the present invention, the elements corresponding to those of figure 3 have been indicated by the same number references, but including a top mark.

### BRIEF DESCRIPTION OF THE DRAWINGS

The present invention will become more apparent hereinafter from the following detailed disclosure, given by way of an exemplary and not limitative example of the invention, with reference to the accompanying drawings, where:
Figure 1 is a cross-sectional view showing the application of an air spring, and related piston according to the present invention, arranged on the rear of an axle of a motor vehicle, trailer, half-trailer or the like and pivoted on the front of the axle;
Figure 2 is a further cross-sectional view showing an embodiment or application with two air springs, and related pistons, according to the invention, arranged in a bridging relationship on an axle of a truck, bus or the like;
Figure 3 shows, in an axial plane, a piston mounted on a rubber membrane, in an embodiment thereof made of a drawn sheet metal material and having a conventional configuration;
Figure 4 is a cross-sectional view, through an axial plane, showing a piston according to the present invention;
Figure 5 is a top plan view of that same piston;
Figure 6 is a further cross-sectional view, through an axial plane, showing a modified embodiment of the piston according to the present invention with a contour designed to provide a maximum flexibility of the spring; and
Figure 7 is a bottom view showing the piston illustrated in figure 6.

### DESCRIPTION OF THE PREFERRED EMBODIMENTS

In figures 1 and 2, the reference number (5) shows an air spring, forming a part of a truck, trailer, half-trailer suspension system.

More specifically, said air spring comprises an elastomeric material membrane having either a cylindric or a conic shape, in its part coupled to the piston, and having two end portions which are tightly connected to a plate (6) rigid with the chassis (1) and a piston (8'), coupled to the axle (4) or through suspension elements in turn rigidly coupled to said axle.

The inner volume of the membrane is occupied, as is known, by a pressurized fluid, which constitutes the bearing element for the suspended masses of the vehicle.

The piston (8') according to the present invention, as shown in figure 4, comprises a piston body defining the same outer side surface (81') and top surface (82') as that of the piston of figure 3, and which can have the same type of connection with the membrane (7).

This piston, instead of a sheet metal material, is made of a plastics material, such as nylon (6 or 66), preferably reinforced by glass fiber materials, and being formed by molding or pressing operations.

The outer side surface (81'), which will be hereinafter called "mantle" of a preferably cylindric configuration, comprises in its inside a cup portion configuration, facing with its mouth portion the membrane (7).

The top end portion (82') of the cup portion is upward projected, with respect to the said mantle (81').

About the ring-like portion (83') is arranged, with a tightly relationship, the edge (73) of the membrane (7) (see figure 3).

More specifically, said mantle (81'), which is open at the top thereof, is closed, on its bottom, by a flat portion (61') coupled through radially expending ribs (91) so formed as to provide a reinforcing construction between the mantle (81') and bottom (61').

Inside said bottom a contoured flat portion or disc (92), integrally formed with said bottom, is provided, said contoured flat portion forming a reinforcement sheet metal element to support the forces operating on said bottom and due to the static and dynamic stress and adapted to receive a screw (93) welded to said flat portion, for providing a direct connection to an axle, or an indirect connection through other suspension elements.

The projecting portion (64), integral with said bottom, provides an assembly orienting and anti-rotary element.

The rigid disc (92) has such a shape as to prevent any rotary movement during the clamping of the screw (93) welded to the vehicle axle, while allowing the bolt clamping load to be discharged to the vehicle axle.

The rigid disc (92) is moreover provided with plastic material passage holes, to allow it to be co-molded.

The wall of the mantle (81') has a thin and strong construction owing to the provision of the radially extending ribs (91) which, in cooperation with the bottom (61') provide a construction adapted to resist against the pressure of the membrane (7) on the wall of the mantle (81').

The membrane, in particular, will have a constant thickness up to the upward projecting top end portion (82') thereof.

This characteristic defines, at the top portion, a cut-out (94) allowing to integrally exploit the inner volume of the piston (8').

As it should be apparent to one skilled in the air spring field, it would be possible to change the spring stiffness by increasing the volume of the latter.

Thus, owing to the present invention, it is provided a small weight piston which is not affected by corrosion problems and which, moreover, is very strong and can be assembled in a very quick manner.

Moreover, since it is possible to integrally exploit all the inner volume of the piston, differently from other like pistons made of a plastics material, it is possible to provide a reduction of its stiffness, thereby improving the insulation with respect to vibrations induced by the ground or road, thereby enhancing the vehicle reading comfort.

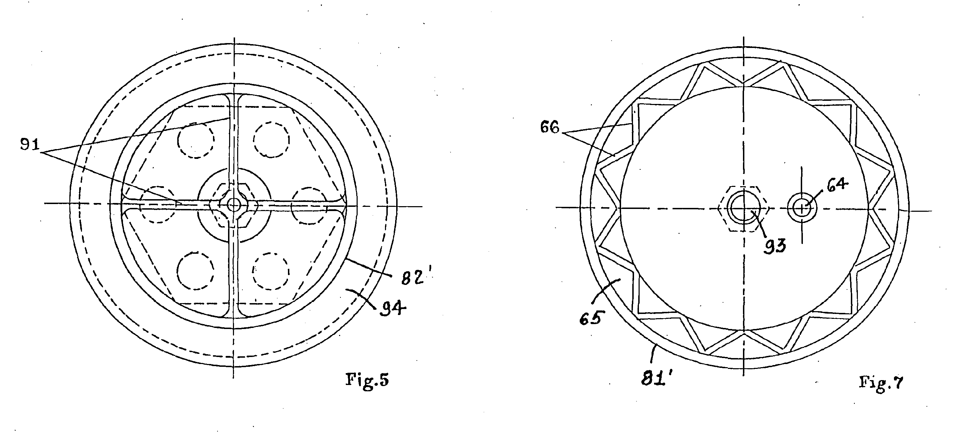

A further effect on the air spring stiffness and accordingly on the reading comfort, can also be obtained by suitably contouring (84) the mantle (81') of the piston about the working or operating position of the elastomeric membrane (7) (figure 5).

Thus, owing to the possibility of using all the volume of the piston, together with its specifically designed contouring, it is possible to provide a maximum insulation of the vibrations in standard operating conditions.

A further reduction of the weight of the piston (8') can be made by providing a circumferential cut-out (65) coupling the mantle (81) to the flat bottom (61') through a series of ribs (66) (figure 7).

The invention, as disclosed, is not limited to the above disclosed embodiments thereof, which must be considered only as constructional examples.

Actually, the disclosed device is susceptible to several modifications and variations, without departing from the scope of the invention.

## Claims

1. An improved air spring piston for motor vehicle, trailer and half-trailer suspension systems, comprising a piston body defining a head cylindric portion, having a bearing surface at a bottom end portion of an air spring, a rigid disc with a clamping screw rigidly coupled to the bottom of said head cylindric portion, **characterized in that** said body is made as a plastics material single-piece, and that said head cylindric portion is coupled to the bottom in the form of bell.

2. An air spring piston, according to claim 1, **characterized in that** said air spring piston comprises, at the top of its cylindric portion, an annular element for tightly connection with an edge of a membrane forming said air spring.

3. A piston, according to one or more of the preceding claims, **characterized in that** said annular element defines, on the top cylindric portion, a cut-out with a substantially constant thickness of the piston wall.

4. A piston, according to one or more of the preceding claims, **characterized in that** said piston comprises radially extending ribs defined between the head cylindric portion and the bottom.

5. An air spring piston, according to one or more of the preceding claims, **characterized in that** said annular element defines a bearing surface for said air spring membrane.

6. A piston, according to one or more of the preceding claims, **characterized in that** said rigid disc is embedded in a plastics material single piece body.

7. A piston, according to one or more of the preceding claims, **characterized in that** said piston comprises a plurality of clamping means for clamping said rigid disc to said bottom.

8. A piston, according to one or more of the preceding claims, **characterized in that** said piston comprises, on a side surface of said head cylindric portion, a contoured portion adapted to enhance an insulation of vibrations induced by ground and road.

9. A piston, according to one or more of the preceding claims, **characterized in that** said piston comprises, on said bottom, cut-outs at a connection region between said head cylindric portion and bottom.

10. An air spring piston, according to one or more of the preceding claims, **characterized in that** said air spring piston further comprises, on an outer surface of the bottom, a reference pin for orienting said piston and said chassis coupling disc, so as to prevent the latter from turning in assembling said piston.

11. An air spring piston, according to one or more of the preceding claims, **characterized in that** said reference pin is made as a single piece with said body.

12. An air spring piston, according to one or more of the preceding claims, **characterized in that** said body is made of polyamide 6 or 6.6.

13. An air spring piston, according to one or more of the preceding claims, **characterized in that** said body is made of a fiber glass reinforced plastics material.
